# EUROPEAN PATENT SPECIFICATION

(11) **EP 2 426 536 B1**
(45) Date of publication and mention of the grant of the patent: **09.01.2019**
(21) Application number: 11732947.4
(22) Date of filing: 14.01.2011
(51) Int. Cl.: G02B 6/38, G02B 6/40

(54) **OPTICAL CONNECTOR AND OPTICAL CONNECTOR FERRULE**
OPTISCHER STECKVERBINDER UND FERRULE FÜR DEN OPTISCHEN STECKVERBINDER
CONNECTEUR OPTIQUE ET FERRULE POUR CONNECTEUR OPTIQUE

(30) Priority: 14.01.2010 JP 2010006291
(43) Date of publication of application: 07.03.2012
(73) Proprietor: Fujikura Ltd., Tokyo 135-8512 (JP)
(72) Inventor: TAKAHASHI Shigeo, Sakura-shi Chiba 285-8550 (JP); TAKIZAWA Kazuhiro, Sakura-shi Chiba 285-8550 (JP)
(74) Representative: Cabinet Plasseraud
(86) International application number: PCT/JP2011/050515
(87) International publication number: WO 2011/087077

(56) References cited:
- JP-A- 8 106 028
- JP-A- 10 123 366
- JP-A- 11 064 684
- JP-A- 11 072 655
- JP-A- 11 242 136
- JP-A- 11 305 073
- JP-A- 11 305 074
- JP-A- 11 316 321
- JP-A- 11 316 322
- JP-A- 63 118 108
- JP-A- 2002 196 186
- JP-A- 2002 318 324
- JP-A- 2004 138 917
- US-A- 6 085 003
- US-B1- 6 402 388
- US-B1- 6 676 299

## Description

### TECHNICAL FIELD

The present invention relates to an optical connector that is assembled to a front end of a light propagating body such as an optical fiber cord or an optical fiber cable, and is relates to an optical connector ferrule that is used to the optical connector.

Priority is claimed on Japanese Patent Application No 2010-6291 filed on January 14, 2010.

### BACKGROUND ART

As an optical connector, for example, there is known a structure in which a guide pin positioning type ferrule is accommodated in a cylindrical housing as in an MPO type optical connector (stipulated in JIS C5982 and the like, MPO: Multi-fiber Push On) (for example, see Patent document 1). An example of an optical connector is disclosed in Patent documents 2 and 3. Patent document 4 relates to a device including two optical fibers bonded to a body.

### PRIOR ART DOCUMENTS

### PATENT DOCUMENTS

[Patent document 1] Japanese Unexamined Patent Application, First Publication No.2002-196189.
[Patent document 2] US Patent, No. 6402388
[Patent document 3] US Patent Application, No. 6085003
[Patent document 4] US Patent, No. 6676299

### DISCLOSURE OF INVENTION

### PROBLEMS TO BE SOLVED BY THE INVENTION

In the optical connector, the movement of the ferrule is generally regulated by the housing in order to reliably fit the guide pin during butt-connection.
For this reason, if the optical connector is largely inclined or the housing is largely bent when the optical fiber is laterally pulled (so-called side-pull) in the state where the optical connector is connected to an optical connector of a counter connection part inside an optical connector adapter, an excessive force is exerted on the ferrule due to the housing, which may cause a problem in that the ferrule may be broken or the state of the butt-connection between the ferrules may be affected.

The invention is made in view of such circumstances, and it is an object of the invention to provide an optical connector and an optical connector ferrule capable of reliably fitting a guide pin at the time of connection and preventing side-pull adversely affecting a ferrule and a connection state thereof.

### MEANS FOR SOLVING THE PROBLEMS

An aspect of the invention provides an optical connector according to claim 1.

In the optical connector of the aspect of the invention, a plurality of the regulating portions may be provided at upper and lower inner surfaces of the housing.

In the optical connector of the aspect of the invention, the housing may accommodate an inserting optical fiber of which one end portion reaching a joint end surface of the ferrule is fixed to the ferrule and the other end portion is connected to the optical fiber, and a joint reinforced portion which reinforces the joint portion of the inserting optical fiber and the optical fiber.

Another aspect of the invention provides an optical connector ferrule which is formed as a guide pin positioning type forming an end thereof can be butt-connected to an optical fiber, wherein the ferrule is used in an optical connector which accommodates the ferrule inside a cylindrical housing so as to be movable forward and backward in a butt-connection direction while being biased forward in the butt-connection direction by a biasing member, wherein the ferrule includes a base portion that has a thickness h in an up-down direction that perpendicular to the butt-connection direction and a thinned portion that is formed in front of the base portion and has a thickness k smaller than the thickness h of the base portion, wherein when the ferrule moves forward in the butt-connection direction, a regulating portion as a protrusion portion protruding toward the inner surface of the housing and the base portion facing the regulating portion approach to each other, so that the movement of the ferrule in the thickness direction is regulated, and wherein when the ferrule moves backward in the butt-connection direction, the regulating portion and the thinned portion facing the regulating portion are separated from each other, so that the regulation of the movement of the ferrule in the thickness direction is released.

### EFFECTS OF INVENTION

According to an aspect of the invention, since the ferrule includes the base portion and the thinned portion having a thickness smaller than that of the base portion, the movement of the ferrule in the thickness direction at the base portion is regulated by the regulating portion of the housing in a non-connection state. So that the guide pin can be reliably fitted to the guide pin inserting hole of the counter optical connector during connection work.

Further, when the ferrule is retracted due to the butt-connection, the thinned portion reaches the position facing the regulating portion of the housing, so that the regulation of the movement in the thickness direction is released.

For this reason, even when the optical fiber is laterally pulled (side-pull), an excessive force is not exerted on the ferrule due to the housing, the breakage of the ferrule can be prevented, and the state of the connection with the counter optical connector is not adversely affected.

### BRIEF DESCRIPTION OF THE DRAWINGS

FIG. 1 is a perspective view showing a ferrule of an optical connector according to an embodiment of the invention.
FIG. 2A is a cross-sectional view showing the optical connector and taken along a plane where multi-core optical fibers are arranged.
FIG. 2B is a cross-sectional view showing the optical connector of the previous figure and is a cross-sectional view taken along a plane which is perpendicular to the surface of the previous figure and is parallel to the longitudinal direction of the optical fiber.
FIG. 3A is a cross-sectional view showing a ferrule and a joint reinforced portion of the optical connector shown in FIGS. 2A and 2B, and is a cross-sectional view taken along a plane where the multi-core optical fibers are arranged.
FIG. 3B is a cross-sectional view showing the ferrule and the joint reinforced portion of the optical connector shown in FIGS. 2A and 2B, and is a cross-sectional view taken along a plane which is perpendicular to the surface of the previous figure and is parallel to the longitudinal direction of the optical fiber.
FIG. 4 is a plan view showing an external optical fiber and an inserting optical fiber of the optical connector.
FIG. 5 is a side view showing the structure of the ferrule and the joint reinforced portion of the optical connector.
FIG. 6A is a perspective view showing a first reinforced member of the joint reinforced portion shown in FIGS. 3A and 3B.
FIG. 6B is a perspective view showing a second reinforced member of the joint reinforced portion shown in FIGS. 3A and 3B.
FIG. 7 is a cross-sectional view showing the joint reinforced portion.
FIG. 8 is an exploded perspective view of a ferrule and a pin clamp.
FIG. 9 is a perspective view showing the pin clamp.
FIG. 10 is a cross-sectional view showing the joint reinforced portion and the pin clamp.
FIG. 11A is a cross-sectional view showing a main part of the optical connector in a non-connection state.
FIG. 11B is a cross-sectional view showing a main part of the optical connector in a butt-connection state.
FIG. 12 is an explanation view showing a state of the optical connector when the optical fiber is pulled laterally (side-pull occurs).
FIG. 13A is a cross-sectional view schematically showing another example of the optical connector, and is a cross-sectional view taken along a plane where the multi-core optical fibers are arranged.
FIG. 13B is a cross-sectional view schematically showing the optical connector of the previous figure, and is a cross-sectional view taken along a plane which is perpendicular to the surface of the previous figure and is parallel to the longitudinal direction of the optical fiber.
FIG. 14 is a side cross-sectional view showing a modified example of a locking convex portion of the ferrule.

### DETAILED DESCRIPTION OF THE PREFERRED EMBODIMENTS

Hereinafter, an exemplary embodiment of the invention will be described by referring to the drawings.

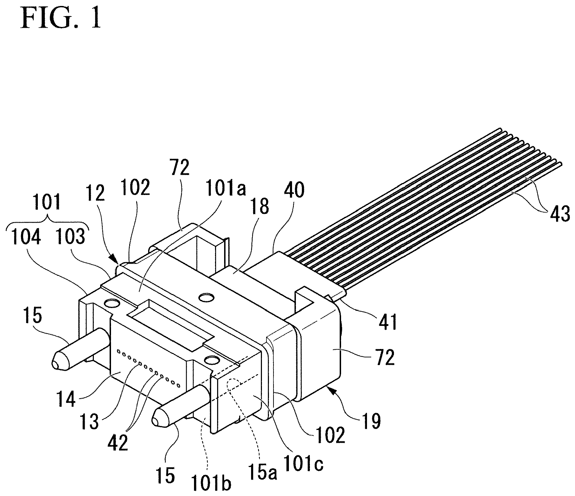

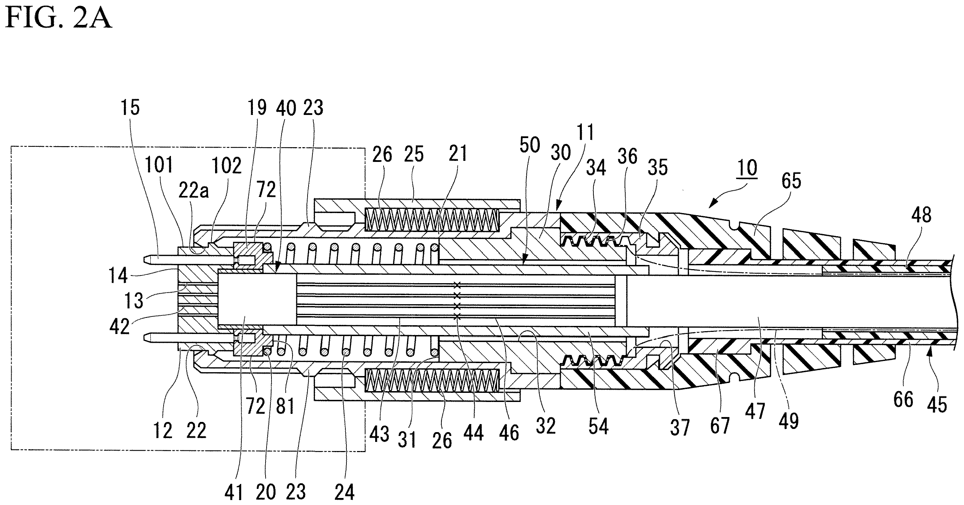

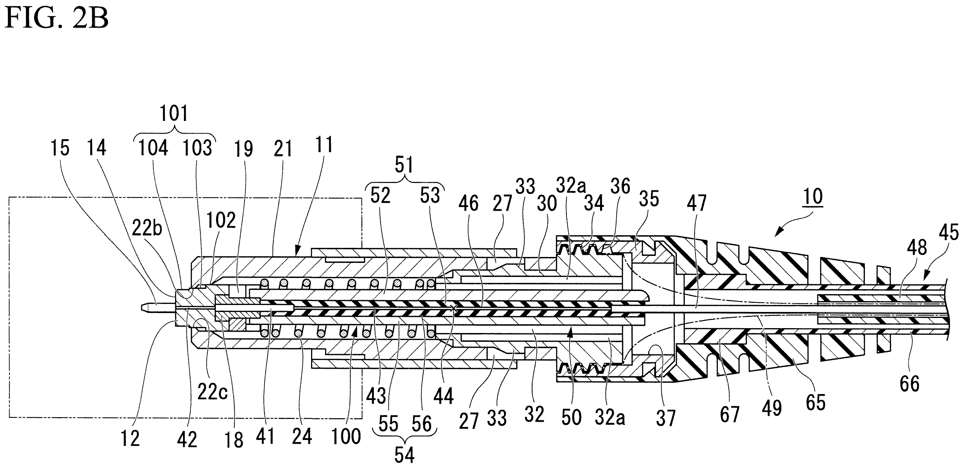

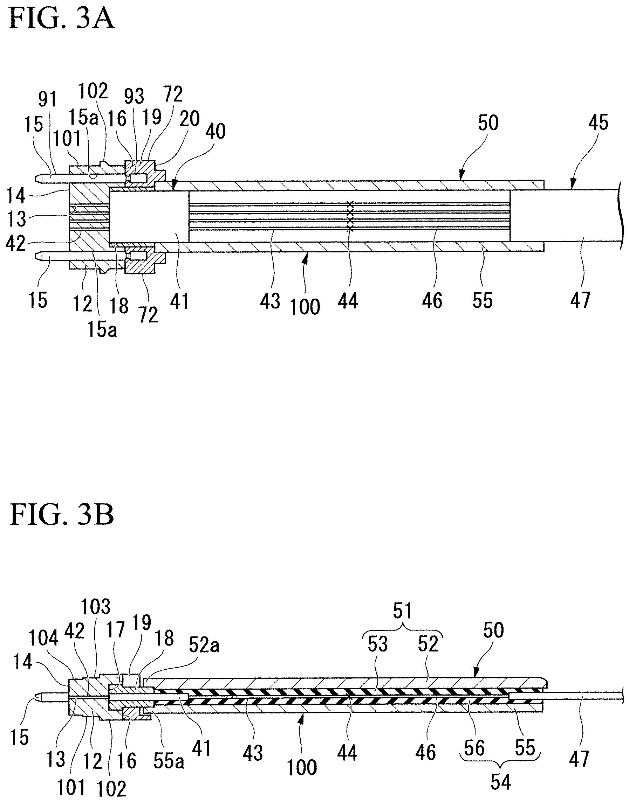

FIGS. 2A and 2B show an optical connector 10 of the embodiment. FIG. 1 is a perspective view showing a ferrule 12 of the optical connector 10. FIGS. 3A and 3B are cross-sectional views showing the ferrule and a joint reinforced portion of the optical connector 10. Furthermore, FIGS. 2A and 2B may be simply referred to as "FIG. 2".

The optical connector 10 has a configuration in which the other end portion (second end portion) 43 of an inserting optical fiber 40 having one end portion (first end portion) 42 fixed to the ferrule 12 (the optical connector ferrule) is fusion spliced with a front end portion 46 of an external optical fiber 45, and a joint reinforced portion 50 formed by interposing a fusion splicing portion 44 between a pair of reinforced members 51 and 54 so as to reinforce the fusion splicing portion 44 is accommodated inside a housing or the like.

In the description below, in order to distinguish both directions along the longitudinal direction of the optical fiber (the left-right direction of FIG. 2), the direction in which a joint end surface 14 of the ferrule 12 faces (the left side of FIG. 2) may be referred to as a "front end direction" or a "front side", and the opposite direction (the right side of FIG. 2) may be referred to as a "rear end direction", a "base end direction", or a "rear side". The front-rear direction indicates the longitudinal direction in one end portion 42 of the inserting optical fiber 40, and also indicates the connection direction when the optical connector 10 is connected to the optical connector which serves as the counter connection part.

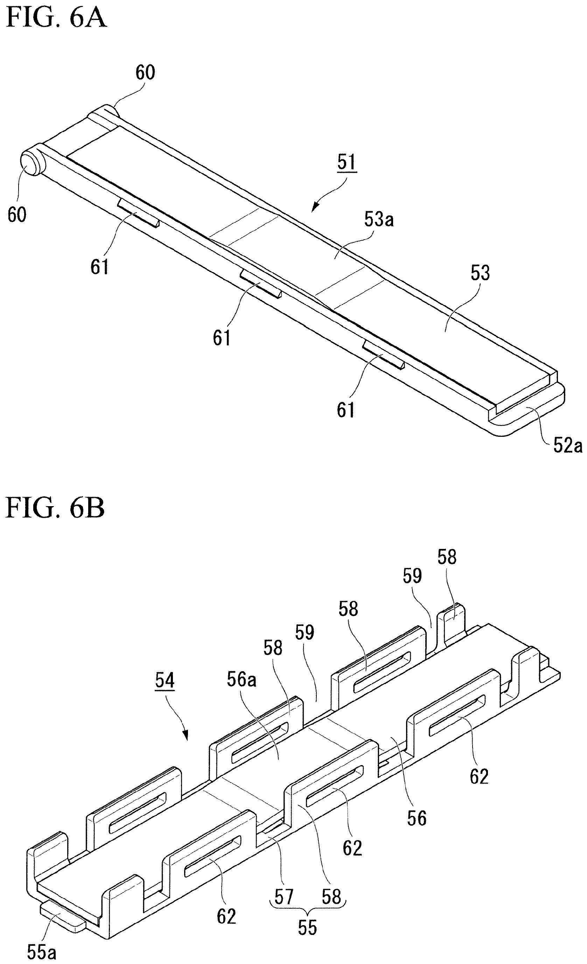

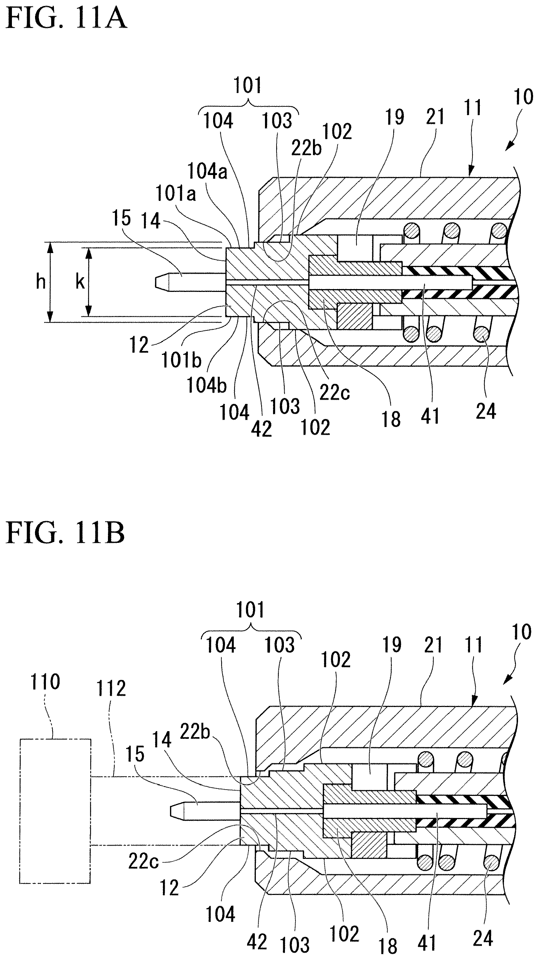

Further, FIGS. 3A and 3B may be referred to as "FIG. 3", FIGS. 6A and 6B may be referred to as "FIG. 6", and FIGS. 11A and 11B may be referred to as "FIG. 11".

The external optical fiber 45 includes a light propagating body with an optical fiber such as an optical fiber cord or an optical fiber cable. In the case of the embodiment, the external optical fiber 45 is an optical fiber cord that includes a multi-core optical fiber core 47 which is formed by an optical fiber ribbon with a plurality of optical fibers (optical fiber strands, not shown) arranged in line in the lateral direction perpendicular to the longitudinal direction, a tubular jacket 48 which encloses the periphery of the multi-core optical fiber core 47, and a tension fiber 49 which is accommodated between the optical fiber core 47 and the jacket 48. At the front end portion 46 of the external optical fiber 45, a resin coating of the optical fiber core 47 and a resin coating of the optical fiber strand are removed, so that a plurality of bare optical fibers (the portions of a core and a clad) are separated from each other.

The number of bare optical fibers 46 (the number of cores) included in the optical fiber core 47 may be, for example, two cores, four cores, eight cores, twelve cores, or the like. Furthermore, only four cores are shown in FIGS. 2A, 3A, 4, 7, and 10 by simplifying the configuration of twelve cores. The optical fiber cord of the embodiment has a configuration in which one optical fiber ribbon is accommodated inside the jacket, but the invention is not particularly limited thereto. For example, the external optical fiber may adopt a configuration in which one jacket accommodates a plurality of single core optical fiber core, one jacket accommodates a plurality of optical fiber ribbons, or one jacket accommodates one or more optical fiber ribbons and one or more single core optical fiber cores.

The jacket 48 is formed of, for example, a resin such as polyethylene and desirably has flexibility. A plurality of the tension fibers 49 extend along the longitudinal direction of the optical fiber, and function as tension bodies which receive a tensile force (a tension) exerted on the light propagating body. The fiber material used in each tension fiber 49 is not particularly limited as long as the material is able to obtain a demanded tensile strength, and for example, an aramid fiber, a glass fiber, a carbon fiber, and the like may be exemplified.

Furthermore, the tension body or the jacket is not essentially needed in the invention. For example, an optical fiber core or an optical fiber ribbon without the jacket may be used as the external optical fiber. Further, for example, various wires such as a metallic wire which is a steel wire or a fiber-reinforced plastic (FRP) wire may be used as the tension body depending on the structure of the optical fiber cable or the like. As the optical fiber cable, an optical drop cable, an optical indoor cable, and the like may be exemplified.

The inserting optical fiber 40 is an optical fiber of which one end portion (first end portion) 42 is fixed to the ferrule 12 and the other end portion (second end portion) 43 protrudes (extends) backward from the ferrule 12. In the case of the embodiment, the inserting optical fiber 40 is formed as a multi-core optical fiber core 41 formed of an optical fiber ribbon, where at one end portion 42 and the other end portion 43 of the optical fiber core wire 41, the resin coating of the optical fiber core 41 and the resin coating of the optical fiber strand are removed so that a plurality of bare optical fibers (the portions of the core and the clad) are separated from each other.

The front end of the inserting optical fiber 40 is exposed to the joint end surface 14, and is butt-connected to the optical fiber of the optical connector corresponding to the counter connection part.

Furthermore, the optical fiber used as the inserting optical fiber 40 is not limited to the multi-core optical fiber, and a configuration may be adopted in which one or a plurality of short single core optical fibers are inserted into one ferrule, a plurality of optical fiber ribbons are accommodated into one ferrule, or one or more optical fiber ribbons and one or more single core optical fiber cores are accommodated into one ferrule.

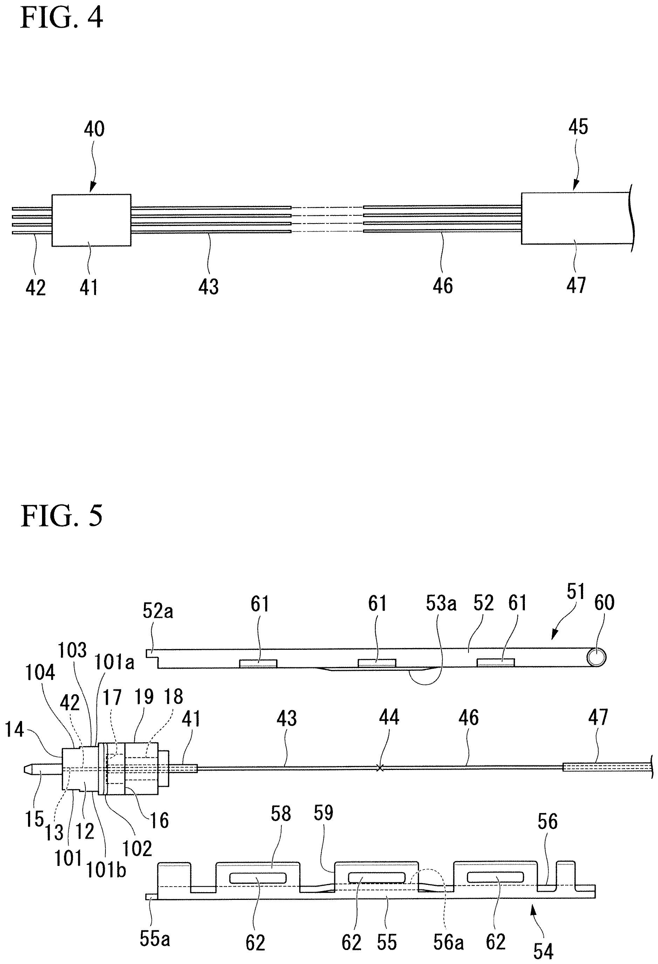

As shown in FIG. 4, the other end portion 43 of the inserting optical fiber 40 corresponds one-to-one to the front end portion 46 of the external optical fiber 45, and both of them are fusion spliced. Then, as shown in FIG. 3, the fusion splicing portion 44 of the other end portion 43 of the inserting optical fiber 40 and the front end portion 46 of the external optical fiber 45 is reinforced by being interposed between the pair of reinforced members 51 and 54 at the joint reinforced portion 50.

The reinforced members 51 and 54 respectively include reinforced member bodies 52 and 55 which are formed as rigid members such as resin or metal, and adhesion layers 53 and 56 which are provided at the inner surface side corresponding to the side contacts to the other end portion 43 of the inserting optical fiber 40 and the front end portion 46 of the external optical fiber 45.

As shown in FIGS. 5 to 7, the pair of reinforced members 51 and 54 respectively includes a convex portion 61 and a concave portion 62 which engage with each other at both sides of the width direction (the direction perpendicular to the plane of paper of FIG. 5) corresponding to the direction perpendicular to the longitudinal direction of the inserting optical fiber 40 and the external optical fiber 45. By engaging the convex portion (the engagement convex portion) 61 with the concave portion (the engagement concave portion) 62, the adhesion state between the adhesion layers 53 and 56 of the pair of reinforced members 51 and 54 is maintained.

The body 55 of the second reinforced member 54 includes a bottom wall portion 57 and side wall portions 58 and 58 provided at both sides in the width direction, and the engagement concave portion 62 is a penetration hole formed at the side wall portion 58.

The side wall portion 58 of the second reinforced member 54 is divided into a plurality of portions (tongue-shaped portions) with notched portions 59 interposed therebetween, and one or less engagement concave portions 62 is formed at one piece of the side wall portion 58.

In order to easily open and close the reinforced members 51 and 54, a slope 58a is formed at the inner surface of the side wall portion 58.

The adhesion layers 53 and 56 respectively include bulged portions 53a and 56a of which the surface heights are bulged near the fusion splicing portion 44, so that a further high pressing force can be maintained between the bulged portions 53a and 56a. Further, both sides of the bulged portions 53a and 56a (both sides of the bare optical fibers 43 and 46 in the longitudinal direction) are provided with alleviation portions 53b and 56b of which the surface heights are lower than that of the bulged portions 53a and 56a, so that the pressing force is alleviated.

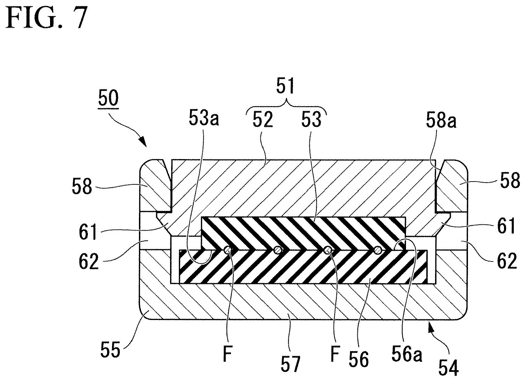

As shown in FIG. 7, the adhesion layers 53 and 56 are depressed at a position contacts to the inserting optical fiber and the external optical fiber (which are generally shown as the optical fiber F in FIG. 7) so as to come into close contact with the outer peripheral surface of the optical fiber F in the vicinity of the fusion splicing portion 44.

As shown in FIGS. 1 to 3, the ferrule 12 includes a front end surface (a joint end surface) 14 which is butt-connected to a ferrule (not shown) of another optical connector (an optical connector corresponding to a counter connection part), a rear end surface 16 which is an end surface opposite to the joint end surface 14, an optical fiber inserting hole (a microscopic hole) 13 which is opened to the joint end surface 14, and a boot accommodating hole 17 which is opened to the rear end surface 16. The ferrule 12 can be manufactured as, for example, a plastic single molding product. The joint end surface 14 of the ferrule 12 may be a perpendicular surface which is perpendicular to the center axis of the optical fiber inserting hole 13 (which approximately matches the optical axis of the optical fiber 42) or a slope which is inclined in a predetermined direction corresponding to the ferrule of another optical connector.

The optical fiber inserting hole 13 is formed as many as the number of the optical fibers at one end portion 42 of the inserting optical fiber 40. As a method of fixing the bare optical fiber corresponding to one end portion 42 of the inserting optical fiber 40 to the ferrule 12, for example, a method of injecting adhesive into the optical fiber inserting hole 13 is simple. Each of the optical fiber inserting holes 13 is connected to the boot accommodating hole 17. A ferrule boot 18 is attached to the periphery of the optical fiber core 41, and is accommodated in the boot accommodating hole 17. It is desirable that the ferrule boot 18 be formed of, for example, a material such as rubber or elastomer with flexibility. However, the ferrule boot 18 may be formed of a material such as resin or metal with low flexibility.

The number of the optical fiber inserting holes 13 provided in the ferrule 12 (the number of cores) may be, for example, two cores, four cores, eight cores, twelve cores, and the like, and the optical fiber inserting holes 13 are provided in accordance with the number of cores of the optical fiber core 47. Furthermore, in the optical connector 10 of the embodiment, a single core ferrule may be used as the ferrule 12.

Regarding the arrangement of the optical fiber inserting holes 13 at the joint end surface 14 of the multi-core ferrule 12, it is desirable that the optical fiber inserting holes 13 be arranged in line in accordance with the arrangement of the optical fibers interposed between the reinforced members 51 and 54. Furthermore, the invention is not limited to a configuration in which the arrangement of the optical fibers in the ferrule 12 is the same as the arrangement of the optical fibers in the joint reinforced portion 50, but the arrangement of the optical fibers separated for each core between the ferrule 12 and the joint reinforced portion 50 may be changed.

As shown in FIGS. 1 and 11A, the ferrule 12 includes a body portion 101 with the joint end surface 14 and a locking convex portion 102 formed at the rear side of the body portion 101 so as to protrude outward.

The ferrule 12 is formed in a shape in which the dimension in the arrangement direction of the optical fiber inserting holes 13 (the up-down direction of FIG. 2A) is larger than the dimension in the direction perpendicular thereto (the up-down direction of FIG. 2B), that is, a flat shape. Hereinafter, the arrangement direction of the optical fiber inserting holes 13 is set as the width direction, and the direction perpendicular thereto is set as the thickness direction.

The joint end surface 14 of the ferrule 12 is substantially formed in a rectangular shape of which the side along the width direction is set as the long side and the side along the thickness direction is set as the short side.

In FIGS. 2B, 3B, 11B, and the like, the left direction indicates a direction in which the ferrule 12 is butt-connected to the counter connection optical connector 110 (the counter optical connector 110), and the up-down direction perpendicular thereto indicates the thickness direction of the ferrule 12.

As shown in FIG. 2, the ferrule 12 is movable in the front-rear direction (the butt-connection direction) while being biased forward by a ferrule spring 24.

For this reason, as shown in FIG. 11A, the ferrule 12 is comparatively positioned at a front side while the optical connector 10 is not connected to the counter connection optical connector 110 (the counter optical connector 110) (in a non-connection state). However, as shown in FIG. 11B, when the optical connector 10 is butt-connected to a ferrule 112 of the counter optical connector 110, the ferrule 12 is pressed by the ferrule 112 so as to move backward.

Hereinafter, the position of the ferrule 12 shown in FIG. 11A indicates an "advanced position", and the position of the ferrule 12 retracted due to the butt-connection as shown in FIG. 11B indicates a "retracted position".

As shown in FIG. 1, the locking convex portion 102 is formed from both surfaces of the body portion 101 in the thickness direction (an upper surface 101a and a lower surface 101b) and both side surfaces 101c and 101c.

As shown in FIG. 2A, the forward movement of the locking convex portion 102 is regulated by a locking protrusion 22a formed in the inner surface of the plug frame 21, whereby the forward movement of the ferrule 12 is regulated and the separation of the ferrule 12 is prevented.

As shown in FIG. 2B and FIG. 11A, the inner surfaces (the ceiling surface and the bottom surface) of the plug frame 21 (housing 11) are respectively provided with regulating portions 22b and 22c which regulate the movement of the ferrule 12 in the thickness direction.

The shape and the formation position of the regulating portions 22b and 22c are not limited as long as the regulating portion can regulate the movement of the ferrule 12 in the thickness direction in the non-connection state. However, it is desirable that the regulating portions be formed as a protrusion protruding inward from the inner surface of the front end of the plug frame 21.

Furthermore, the regulating portion may be formed only at one of the inner surfaces (the ceiling surface and the bottom surface) of the plug frame 21 in the thickness direction. However, it is desirable that the regulating portions be formed at both inner surfaces as shown in the drawings in that the movement toward both sides in the up-down direction is regulated.

As shown in FIG. 1, the body portion 101 includes a base portion 103 and a thinned portion 104 which is provided at the front side of the base portion 103 so as to be thinner than the thickness of the base portion 103.

The base portion 103 is formed so as to have a substantially rectangular shape, and is formed so as to have substantially the same thickness in the front-rear direction.

The thickness of the base portion 103 is set so that the movement of the ferrule 12 in the thickness direction is regulated by the regulating portions 22b and 22c when the ferrule 12 is positioned at the advanced position.

That is, as shown in FIG. 11A, the thickness h of the base portion 103 is set so that the front ends (the protruding ends) of the regulating portions 22b and 22c approach the outer surfaces (the upper surface and the lower surface) of the base portion 103 facing the front ends, and the movement of the ferrule 12 in the up-down direction hardly occurs or the movement amount is extremely small even when the ferrule 12 moves in the up-down direction.

Furthermore, in the example shown in the drawing, the regulating portions 22b and 22c are not used to prohibit the movement of the ferrule 12 in the front-rear direction.

As shown in FIGS. 1 and 11A, the thinned portion 104 is formed so as to have a substantially cross-sectional rectangular shape, and is formed so as to have substantially the same thickness in the front-rear direction.

As shown in FIG. 11A, the thinned portion 104 is formed by a thinned concave portion 104a which is formed at the front end side portion of the body portion 101.

It is desirable that the thinned concave portion 104a be formed at both surfaces of the body portion 101 in the thickness direction, that is, the upper surface 101a and the lower surface 101b of the body portion 101. With such a configuration, when the ferrule 12 is retracted due to the butt-connection, the ferrule 12 is movable in both directions (the up direction and the down direction) in the thickness direction, whereby the position adjusting function can improve.

Furthermore, the thinned concave portion 104a may be formed only at one surface of the body portion 101 in the thickness direction.

The thickness of the thinned portion 104 is set so that the regulation of the movement using the regulating portions 22b and 22c is released when the ferrule 12 is positioned at a position retracted (the retracted position) due to the butt-connection with the counter optical connector 110.

Specifically, as shown in FIG. 11B, the thickness k of the thinned portion 104 is set so that the movement of the ferrule 12 in the up-down direction is permitted due to a sufficient gap between the front ends (the protruding ends) of the regulating portions 22b and 22c and the outer surfaces (the upper surface and the lower surface) of the thinned portion 104 facing the front ends at the retracted position.

As shown in FIG. 3B, the ferrule boot 18 is attached to the ferrule 12 so as to coat the periphery of the portion of the inserting optical fiber 40 protruding from the ferrule 12. The pair of reinforced members 51 and 54 (specifically, the bodies 52 and 55) include protrusions which are provided at an end of the reinforced member near the ferrule 12 and serve as boot gripping portions 52a and 55a, and grips the ferrule boot 18 between the boot gripping portions 52a and 55a.

Accordingly, both ends of the ferrule boot 18 are properly held between the ferrule 12 and the pair of reinforced members 51 and 54, so that the bending or the damage of the inserting optical fiber 40 can be more reliably prevented.

Further, since the slight bending of the ferrule boot 18 is permitted, even when a force in the bending direction is applied to the joint reinforced portion 50 due to the side-pull, the damage of the ferrule 12 and the joint reinforced portion 50 can be prevented.

Since the joint reinforced portion 50 is connected to the rear side of the ferrule 12 through the ferrule boot 18, these are generally referred to as a "joint reinforced portion attached ferrule 100".

The ferrule 12 is provided with guide pins 15 of which the front ends protrude forward from the joint end surface 14 so as to position the ferrule with respect to the counter connection optical connector.

The guide pins 15 are provided so as to be inserted through guide pin inserting holes 15a penetrating between the joint end surface 14 and the rear end surface 16. When the guide pins 15 are inserted into guide pin inserting holes (not shown) provided in a ferrule of another optical connector, the positional deviation in the direction along the surface of the joint end surface 14 (the up-down direction of FIG. 3A, the up-down direction of FIG. 3B, or the inclined direction obtained by the combination thereof) is suppressed, and the accurate positioning operation between the optical connector 10 and the counter connection optical connector can be performed.

The type with which the positioning operation with respect to the counter connection optical connector is performed using the guide pins 15 is called a guide pin positioning type.

As shown in FIG. 3A, in the example shown in the drawing, the guide pin inserting holes 15a and 15a are used to allow the guide pins 15 to be freely inserted thereinto and extracted therefrom, where the guide pin inserting holes are provided along the front-rear direction, and are respectively provided at one side and the other side of the optical fiber inserting hole 13, through which the inserting optical fiber 40 is inserted, namely the optical fiber inserting hole 13 are interposed between the guide pin inserting holes 15a and 15a.

The guide pins 15 are provided so as to be respectively inserted through the pair of guide pin inserting holes 15a.

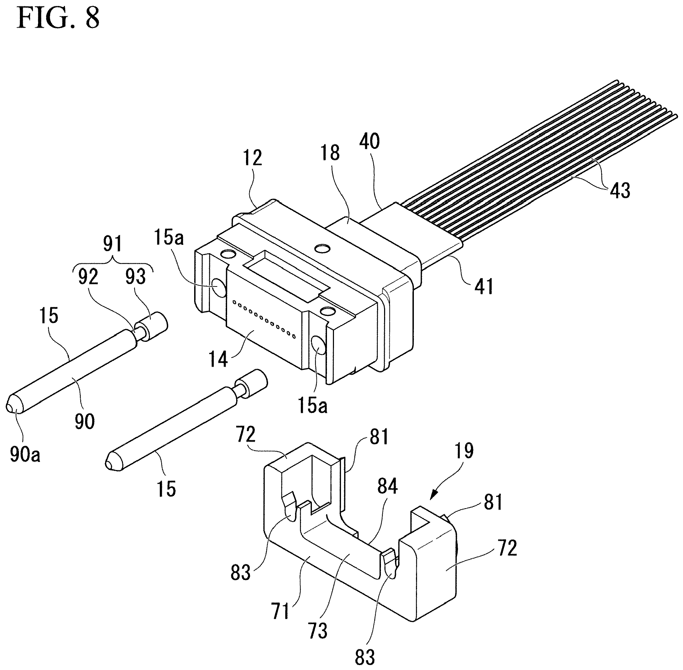

As shown in FIGS. 1 and 8, the guide pin 15 is substantially formed in a cylindrical shape, and includes a body portion 90 which has a taper-shaped front end portion 90a, and a base end portion 91 which is formed at the rear end side of the body portion 90.

The base end portion 91 includes a neck portion 92 which extends backward from the rear end of the body portion 90 and a head portion 93 which is provided at the rear end of the neck portion 92. The neck portion 92 is formed so as to be smaller in diameter than the head portion 93, and the body portion 90 is formed so as to be larger in diameter than the neck portion 92.

As shown in FIGS. 1 to 3, the body portion 90 is inserted through the guide pin inserting hole 15a, and protrudes forward from the joint end surface 14.

Furthermore, the optical connector 10 shown in FIGS. 1 to 3 may be formed as a type (a male type) with the guide pin 15, but as described below, the optical connector may be formed as a type (a female type) without the guide pin 15.

As shown in FIGS. 1 to 3, the rear end surface 16 of the ferrule 12 is provided with a pin clamp 19. The position of the pin clamp 19 in the front-rear direction is present at the front side of the fusion splicing portion 44.

As shown in FIG. 8, the pin clamp 19 is used to support the guide pin 15, and is attachably and detachably attached to the base end portion 91 of the guide pin 15.

The pin clamp 19 of the example shown in the drawing is formed of a synthetic resin material or the like, and is formed in a substantial U-shape which has a bottom portion 71 and side wall portions 72 and 72 provided at both side portions of the bottom portion 71.

The side wall portions 72 and 72 are formed so as to be separated from each other with an insertion space 73 interposed therebetween, and the inserting optical fiber 40 is inserted through the insertion space 73 (see FIGS. 2 and 3). The insertion space 73 may be formed so that the ferrule boot 18 is fittable thereinto.

The side wall portions 72 and 72 are respectively provided with fitting concave portions 83 and 83. The base end portion 91 (the neck portion 92) of the guide pin 15 may be fitted to the fitting concave portion 83 from a direction substantially perpendicular to the guide pin inserting hole 15a.

As shown in FIGS. 8 to 10, a positioning convex portion 81 protruded backward is provided at the rear surface of the side wall portion 72.

The positioning convex portion 81 is used to prevent the positional deviation of the ferrule spring 24, and is inserted into the front end portion of the ferrule spring 24 (see FIG. 2).

The rear surface of the side wall portion 72 becomes a spring seat 20 which receives a biasing force (a pressing force caused by elasticity) from the ferrule spring 24. For this reason, even when the ferrule 12 is not provided with the guide pin 15, the pin clamp 19 is attached to the ferrule 12. The pin clamp 19 can be fitted and fixed to the ferrule 12 through, for example, a concave or a convex (not shown) or the like.

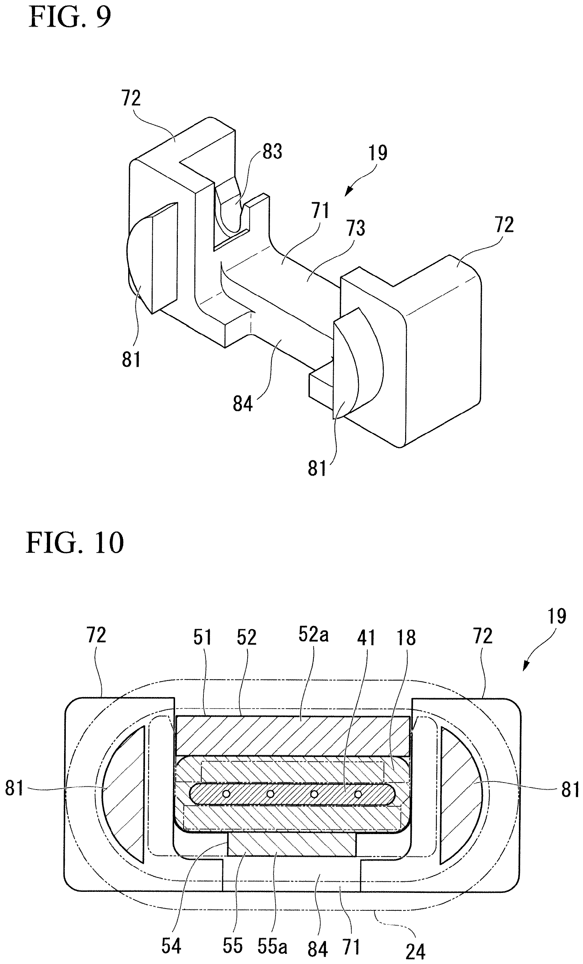

As shown in FIGS. 9 and 10, a notch 84 is formed at the center portion of the rear edge of the bottom portion 71 so as to have a size which permits the upward and downward movement of the boot gripping portion 55a formed at the body 55 of the reinforced member 54.

The optical connector 10 described in the embodiment is a multi-core optical connector, and may have the same structure as that of the MPO type optical connector (an F13-type multi-core optical fiber connector stipulated in JIS C 5982; MPO: Multi-fiber Push On). The optical connector applicable to the invention is not particularly limited regardless of whether it is for a single core or multiple cores.

The housing 11 of the optical connector 10 includes the sleeve-shaped (cylindrical) plug frame 21 and a sleeve-shaped (cylindrical) stop ring 30 which is attached to the rear end side of the plug frame 21.

The ferrule 12 is inserted through the front end side opening 22 of the plug frame 21.

An engagement claw 33, which can engage with an engagement window 27 formed at the side wall portion of the plug frame 21, is formed at the outer surface of the stop ring 30 so as to integrate the plug frame 21 and the stop ring 30 with each other.

The ferrule spring 24 (the biasing member) is used to bias the ferrule 12 forward through the pin clamp 19, and is disposed around the joint reinforced portion 50 so as to allow the front end side of the spring 24 to come into contact with the spring seat 20 at the rear end side of the pin clamp 19 and allow the rear end side of the spring 24 to come into contact with the spring seat 31 at the front end side of the stop ring 30.

When the joint end surface 14 of the ferrule 12 is connected to a ferrule of another optical connector, the ferrule 12 is pressed backward while being guided inside the opening 22, so that the ferrule spring 24 contracts. Then, an appropriate pressing force is exerted between the joint end surface 14 of the ferrule 12 and the joint end surface of the ferrule of another optical connector, so that the joint end surfaces come into close contact with each other. Further, when the connection between the ferrule 12 and the ferrule of another optical connector is released, the ferrule spring 24 expands, so that the ferrule 12 moves inside the opening 22 and returns to the original position.

Engagement portions 23 are provided at both sides of the plug frame 21 in the width direction (both upper and lower sides of FIG. 2A) so as to allow an MPO type connector plug to engage with an MPO type connector adapter or an engagement claw (not shown) of a receptacle. Further, the outer periphery of the plug frame 21 is provided with a coupling 25, and a pair of coupling springs 26 and 26 is accommodated between the outer peripheral surface of the plug frame 21 and the inner peripheral surface of the coupling 25. Accordingly, the coupling 25 can move forward and backward relative to the plug frame 21 in accordance with the expanding or the contracting of the coupling springs 26 and 26. The engagement portion 23 or the coupling 25 corresponds to the MPO type optical connector plug, and has the same configuration as that stipulated in the above-described JIS or the like.

Furthermore, in the case where the invention is applied to a different type of optical connector, a configuration necessary for the connection of the optical connector (the connector connection) is appropriately provided at the ferrule, the housing or the like.

A penetration hole 32 is formed inside the stop ring 30, in which the penetration hole 32 penetrate in the front-rear direction (the left-right direction of FIG. 2) along the longitudinal direction of the optical fiber. The cross-sectional shape of the penetration hole 32 (the cross-sectional shape in the plane perpendicular to the longitudinal direction of the optical fiber) at least includes the cross-sectional shape of the joint reinforced portion 50. Accordingly, when the stop ring 30 is press-inserted into the plug frame 21 from the rear side of the joint reinforced portion 50 while the ferrule 12 is inserted into the opening 22 of the plug frame 21, the stop ring 30 does not interfere with the joint reinforced portion 50 (the press-inserting is not disturbed). When the stop ring 30 is press-inserted into the plug frame 21 from the rear side of the joint reinforced portion 50, the engagement claw 33 is pulled into the joint reinforced portion 50 immediately before the engagement claw 33 reaches the engagement window 27. For this reason, a groove 32a is provided in the inner surface of the penetration hole 32 at the rear surface side of the engagement claw 33, so that the interference between the rear surface of the engagement claw 33 and the joint reinforced portion 50 is prevented.

A male screw portion 34 is formed at the outer peripheral surface of the rear end of the stop ring 30. The male screw portion 34 is fastened to the female screw portion 36 formed at the inner peripheral surface of the screw ring 35. The front end portion of the tension fiber 49 of the external optical fiber 45 can be interposed and fixed between the male screw portion 34 and the female screw portion 36. The screw ring 35 includes an opening 37 at the rear end side thereof, and the portions of the tension fiber 49 of the external optical fiber 45 and the optical fiber core wire 47 are inserted through the opening 37. It is desirable that the cross-sectional shape of the opening 37 (the cross-sectional shape in a plane perpendicular to the longitudinal direction of the optical fiber) have a certain degree of opening dimension so as to prevent the tension fiber 49 and the joint reinforced portion 50 from coming into contact with each other.

The outer peripheral surface of the screw ring 35 is provided with an external optical fiber boot 65 which is used to protect the external optical fiber 45. The external optical fiber boot 65 is generally formed of a material with flexibility such as rubber or elastomer or the like. In the case of the embodiment, a protection tube 66 is attached to the periphery of the jacket 48 of the external optical fiber 45, and an annular fitting portion 67 of which the diameter increases at the front end side of the tube 66 is fitted into the external optical fiber boot 65.

The sequence of assembling the housing or the like is not particularly limited, but for example, the following sequence may be exemplified.

As an advance preparation performed before fusion splice, the external optical fiber 45 is made to pass through the ferrule spring 24, the stop ring 30, the screw ring 35, the external optical fiber boot 65, and the protection tube 66. It is desirable that these components be disposed at the rear side (the right side of FIG. 2) so as not to disturb the fusion splice.

The bare optical fibers 43 and 46 are fusion spliced, and the fusion splicing portion 44 is reinforced by being interposed between the pair of reinforced members 51 and 54 at the joint reinforced portion 50.

As shown in FIG. 8, since the fitting concave portion 83 of the pin clamp 19 is formed downward, the neck portion 92 of the guide pin 15 can be inserted or extracted in the up-down direction.

For this reason, when the pin clamp 19 is moved laterally (from the downside to the upside in FIG. 8) so that the base end portion 91 of the guide pin 15 is fitted to the fitting concave portion 83, the pin clamp 19 can be installed at the rear end side of the ferrule 12.

After the ferrule 12 is disposed inside the opening 22 of the plug frame 21 by attaching the plug frame 21 from the front side of the ferrule 12 (the left side of FIG. 2), the stop ring 30 is press-inserted into the plug frame 21 so as to allow the engagement claw 33 to engage with the engagement window 27 and accommodate the ferrule spring 24 together with the ferrule 12 and the joint reinforced portion 50. The coupling 25 may be attached onto the plug frame 21 in advance or may be attached thereto after the attachment of the stop ring 30.

The front end portion of the tension fiber 49 is disposed on the male screw portion 34 of the stop ring 30, and the female screw portion 36 of the screw ring 35 is fastened to the male screw portion 34 so as to fix the front end portion of the tension fiber 49. When the front end portion of the tension fiber 49 extends to the outer periphery of the plug frame 21, the front end portion is cut if necessary. Furthermore, the boot 65 is attached onto the stop ring 30. According to the above-described sequence, the optical connector 10 shown in FIG. 2 can be assembled.

Furthermore, when the external optical fiber does not include the tension fiber, the housing may be integrated by fastening the female screw portion 36 of the screw ring 35 to the male screw portion 34 of the stop ring 30 without interposing the tension fiber.

The optical connector 10 shown in FIG. 1 is formed as a type (a male type) with the guide pin 15. However, a type (a female type) may be adopted by removing the pin clamp 19 and extracting the guide pin 15 toward the front end.

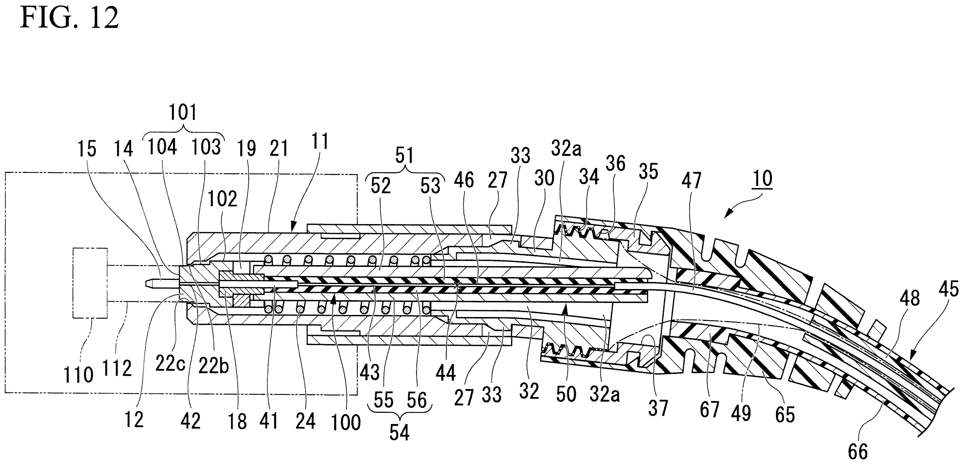

Next, the operation of the optical connector 10 will be described by referring to FIGS. 11 and 12.

As shown in FIG. 11A, in the optical connector 10 in the non-connection state, the ferrule 12 is present at the front position. In this state, the regulating portions 22b and 22c of the plug frame 21 (the housing 11) are present at a position facing the base portion 103.

Since the base portion 103 is formed so that the movement thereof in the thickness direction is regulated by the regulating portions 22b and 22c, at the time of connecting the optical connector 10 to the counter optical connector, the positional deviation of the ferrule 12 in the up-down direction does not occur, the guide pin 15 can be reliably fitted to a guide pin inserting hole (not shown) of the counter optical connector, and the connection work is not disturbed.

As shown in FIG. 11B, in the state where the optical connector 10 is butt-connected to the ferrule 112 of the counter optical connector 110, the ferrule 12 moves backward while being pressed by the ferrule 112, and the thinned portion 104 reaches a position facing the regulating portions 22b and 22c.

Since the thickness of the thinned portion 104 is smaller than that of the base portion 103, the distance from the regulating portions 22b and 22b increases, the regulation of the movement using the regulating portions 22b and 22c in the thickness direction is released, so that the ferrule 12 is permitted to slightly move up and down.

As shown in FIG. 12, when the external optical fiber 45 is pulled laterally (a so-called side-pull; a direction intersecting the direction of the optical fiber) in the state where the optical connector 10 is butt-connected to the ferrule 112 of the counter optical connector 110, the force in such a direction may be exerted on the joint reinforced portion attached ferrule 100.

In the example shown in the drawing, when a force is exerted on the external optical fiber 45 downward (in the thickness direction), there is a concern in that the downward force may be exerted on the rear end portion of the joint reinforced portion attached ferrule 100.

In the optical connector 10, since the slight upward and downward movement of the ferrule 12 is permitted in the butt-connection state, an excessive force is not exerted on the ferrule 12 due to the housing 11 even when the joint reinforced portion attached ferrule 100 is inclined downward.

Since the excessive force is not exerted on the ferrule 12, the damage of the ferrule 12 can be prevented and the state of the connection with the counter optical connector 110 is not adversely affected.

The optical connector 10 shown in FIG. 2 uses the inserting optical fiber 40 fixed to the ferrule 12, but the invention is not limited thereto. The external optical fiber may be directly introduced into the ferrule.

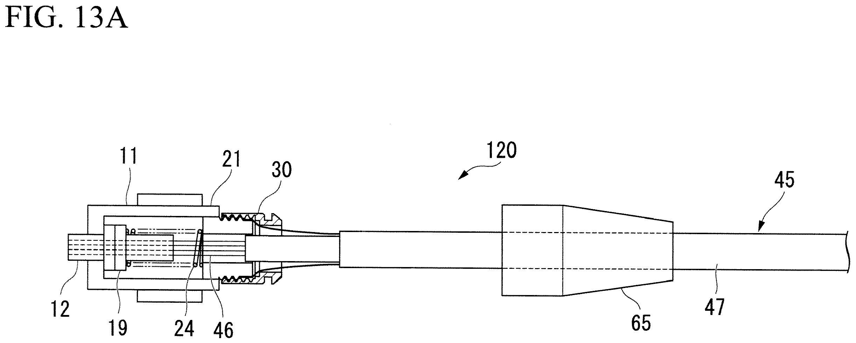

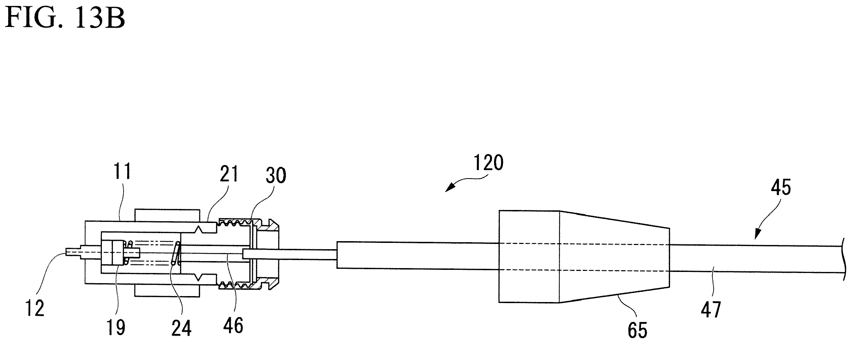

FIGS. 13A and 13B schematically illustrate the optical connector with such a structure, where the optical fiber 46 drawn from the external optical fiber 45 is directly introduced into the ferrule 12. Furthermore, the description of the configuration which has been already mentioned will not be repeated by giving the same reference numerals thereto.

Further, the optical connector 10 shown in FIG. 2 has a configuration in which the fusion splicing portion 44 of the inserting optical fiber 40 and the external optical fiber 45 is interposed between the pair of reinforced members 51 and 54 at the joint reinforced portion 50, but the invention is not limited thereto. The fusion splicing portion 44 may be reinforced by the known reinforced sleeve.

Further, in the connection between the inserting optical fiber 40 and the external optical fiber 45, another connection type, for example, a type (a mechanical splice type) in which the optical fibers are butt-connected between the pair of elements may be adopted.

As shown in FIG. 11 and the like, in the optical connector 10, the locking convex portion 102 is provided near the rear end of the ferrule 12, but the shape of the locking convex portion is not limited thereto.

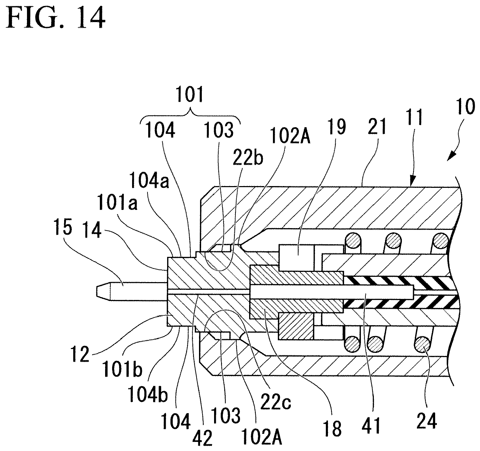

FIG. 14 shows a modified example of the locking convex portion of the ferrule 12. Regarding a locking convex portion 102A shown herein, the front end position is the same as that of the locking convex portion 102 shown in FIG. 11 and the like. However, since the rear end of the locking convex portion 102A is not near the rear end of the ferrule 12, the locking convex portion 102A is different from the locking convex portion 102 in that the dimension in the front-rear direction is small.

The locking convex portion 102A has a function of stabilizing the position of the ferrule 12 present at the advanced position as in the locking convex portion 102.

### DESCRIPTION OF THE REFERENCE SYMBOLS

- 11: 10 OPTICAL CONNECTOR HOUSING
- 12: FERRULE
- 14: JOINT END SURFACE
- 15: GUIDE PIN
- 15a: GUIDE PIN INSERTING HOLE
- 18: FERRULE BOOT
- 22b, 22c: REGULATING PORTION
- 24: FERRULE SPRING (BIASING MEANS)
- 40: INSERTING OPTICAL FIBER
- 42: ONE END (BARE OPTICAL FIBER)
- 43: OTHER END (BARE OPTICAL FIBER)
- 44: FUSION SPLICING PORTION (JOINT PORTION)
- 45: EXTERNAL OPTICAL FIBER (LIGHT PROPAGATING BODY)
- 46: FRONT END PORTION (BARE OPTICAL FIBER)
- 100: JOINT REINFORCED PORTION ATTACHED FERRULE
- 101: BODY PORTION
- 102: LOCKING CONVEX PORTION
- 103: BASE PORTION
- 104: THINNED PORTION
- 104a: THINNED CONCAVE PORTION
- h: THICKNESS OF BASE PORTION
- k: THICKNESS OF THINNED PORTION

## Claims

1. An optical connector (10) comprising a ferrule (12) formed as a guide pin positioning type wherein an end thereof can be butt-connected to an optical fiber, further comprising a cylindrical housing (11) in which the ferrule is accomodated so as to be movable forward and backward in a butt-connection direction while being biased forward in the butt-connection direction by a biasing member (24),
wherein the ferrule (12) comprises a body portion (101) with a joint end surface (14) and a locking convex portion (102) formed at a rear side of the body portion (101) so as to protrude outward,
wherein the body portion (101) comprises a base portion (103) that has a thickness h in a direction perpendicular to the butt-connection direction, and a thinned portion (104) that is formed adjacent to a front of the base portion (103) and has a thickness k smaller than the thickness h of the base portion (103), wherein the base portion (103) is disposed adjacent to a front side of the locking convex portion (102), wherein the thickness h of the base portion (103) is smaller than a thickness of the locking convex portion (102) in the direction perpendicular to the butt-connection direction, wherein a regulating portion (22b, 22c) as a protrusion portion protruding inward from an inner surface of a front end of the housing (11) and the base portion (103) facing the regulating portion (22b, 22c) approach to each other so that the movement of the ferrule (12) in a thickness direction is regulated when the ferrule (12) moves forward in the butt-connection direction, and
wherein the regulating portion (22b, 22c) and the thinned portion (104) facing the regulating portion (22b, 22c) are separated from each other so that the regulation of the movement of the ferrule (12) in the thickness direction is released when the ferrule (12) moves backward in the butt-connection direction.

2. The optical connector (10) according to claim 1,
wherein a plurality of the regulating portions (22b, 22c) is provided at inner surfaces of the housing (11).

3. The optical connector (10) according to claim 1 or 2,
wherein the housing (11) accommodates an inserting optical fiber (40) of which one end portion (42) reaching the joint end surface (14) of the ferrule (12) is fixed to the ferrule (12) and the other end portion (43) is connected to the optical fiber, and a joint reinforced portion (50) which reinforces a joint portion (44) of the inserting optical fiber (40) and the optical fiber.

## Patentansprüche

1. Optischer Steckverbinder (10), umfassend eine Ferrule (12), die als ein Führungsstiftpositionierungstyp ausgebildet ist, wobei ein Ende davon mit einer optischen Faser anstoßend verbunden werden kann, ferner umfassend ein zylindrisches Gehäuse (11), in dem die Ferrule untergebracht ist, sodass sie vor- und zurück in eine Anstoßverbindungsrichtung bewegbar ist, während sie durch ein Vorspannungsglied (24) in die Anstoßverbindungsrichtung in Vorwärtsrichtung vorgespannt wird,
wobei die Ferrule (12) einen Körperabschnitt (101) mit einer Verbindungsendfläche (14) und einen konvexen Verriegelungsabschnitt (102), der an einer Rückseite des Körperabschnitts (101) ausgebildet ist, sodass er nach außen vorsteht, umfasst,
wobei der Körperabschnitt (101) einen Basisabschnitt (103), der eine Dicke h in eine Richtung senkrecht zu der Anstoßverbindungsrichtung aufweist, und einen verdünnten Abschnitt (104), der angrenzend zu einer Vorderseite des Basisabschnitts (103) ausgebildet ist und eine Dicke k kleiner als die Dicke h des Basisabschnitts (103) aufweist, umfasst,
wobei der Basisabschnitt (103) angrenzend zu einer Vorderseite des konvexen Verriegelungsabschnitts (102) angeordnet ist,
wobei die Dicke h des Basisabschnitts (103) in die Richtung senkrecht zu der Anstoßverbindungsrichtung kleiner ist als eine Dicke des konvexen Verriegelungsabschnitts (102), wobei sich ein Regelabschnitt (22b, 22c) als ein Vorsprungabschnitt, der von einer Innenfläche eines Vorderendes des Gehäuses (11) nach innen vorsteht, und der Basisabschnitt (103), der zum Regelabschnitt (22b, 22c) zeigt, einander nähern, sodass die Bewegung der Ferrule (12) in eine Dickenrichtung geregelt wird, wenn sich die Ferrule (12) vorwärts in die Anstoßverbindungsrichtung bewegt, und
wobei der Regelabschnitt (22b, 22c) und der verdünnte Abschnitt (104), der zum Regelabschnitt (22b, 22c) zeigt, voneinander getrennt sind, sodass die Regelung der Bewegung der Ferrule (12) in die Dickenrichtung freigegeben wird, wenn sich die Ferrule (12) rückwärts in die Anstoßverbindungsrichtung bewegt.

2. Optischer Steckverbinder (10) nach Anspruch 1, wobei mehrere Regelabschnitte (22b, 22c) an Innenflächen des Gehäuses (11) bereitgestellt sind.

3. Optischer Steckverbinder (10) nach Anspruch 1 oder 2,
wobei im Gehäuse (11) eine optische Einsteckfaser (40), von der ein Endabschnitt (42), der zu der Verbindungsendfläche (14) der Ferrule (12) reicht, mit der Ferrule (12) befestigt ist und der andere Endabschnitt (43) mit der optischen Faser verbunden ist, und ein Verbindungsverstärkungsabschnitt (50), der einen Verbindungsabschnitt (44) der optischen Einsteckfaser (40) und der optischen Faser verstärkt, untergebracht ist.

## Revendications

1. Connecteur optique (10), comprenant une ferrule (12) sous forme de type de positionnement de broche de guidage, dans lequel une extrémité de celle-ci peut être connectée bout à bout à une fibre optique, comprenant en outre un logement cylindrique (11) dans lequel la ferrule est accueillie afin d'être mobile vers l'avant et vers l'arrière dans une direction de connexion bout à bout tout en étant sollicitée vers l'avant dans la direction de connexion bout à bout par un élément de sollicitation (24),
dans lequel la ferrule (12) comprend une portion de corps (101) avec une surface d'extrémité de joint (14) et une portion convexe de verrouillage (102) formée à un côté arrière de la portion de corps (101) afin de faire saillie vers l'extérieur,
dans lequel la portion de corps (101) comprend une portion de base (103) qui a une épaisseur h dans une direction perpendiculaire à la direction de connexion bout à bout, et une portion amincie (104) qui est formée de façon adjacente à un avant de la portion de base (103) et a une épaisseur k inférieure à l'épaisseur h de la portion de base (103),
dans lequel la portion de base (103) est disposée de façon adjacente à un côté avant de la portion convexe de verrouillage (102),
dans lequel l'épaisseur h de la portion de base (103) est inférieure à une épaisseur de la portion convexe de verrouillage (102) dans la direction perpendiculaire à la direction de connexion bout à bout,
dans lequel une portion de régulation (22b, 22c) en tant que portion de saillie faisant saillie vers l'intérieur à partir d'une surface intérieure d'une extrémité avant du logement (11) et la portion de base (103) faisant face à la portion de régulation (22b, 22c) se rapprochent l'une de l'autre pour que le mouvement de la ferrule (12) dans une direction d'épaisseur soit régulé lorsque la ferrule (12) se déplace vers l'avant dans la direction de connexion bout à bout, et
dans lequel la portion de régulation (22b, 22c) et la portion amincie (104) faisant face à la portion de régulation (22b, 22c) sont séparées l'une de l'autre pour que la régulation du mouvement de la ferrule (12) dans la direction d'épaisseur soit libérée lorsque la ferrule (12) se déplace vers l'arrière dans la direction de connexion bout à bout.

2. Connecteur optique (10) selon la revendication 1,
dans lequel une pluralité des portions de régulation (22b, 22c) est prévue au niveau de surfaces intérieures du logement (11).

3. Connecteur optique (10) selon la revendication 1 ou 2,
dans lequel le logement (11) accueille une fibre optique d'insertion (40) dont une portion d'extrémité (42) atteignant la surface d'extrémité de joint (14) de la ferrule (12) est fixée à la ferrule (12) et l'autre portion d'extrémité (43) est connectée à la fibre optique, et une portion renforcée de joint (50) qui renforce une portion de joint (44) de la fibre optique d'insertion (40) et la fibre optique.
